# EUROPÄISCHE PATENTSCHRIFT

(11) **EP 2 538 510 B1**
(45) Veröffentlichungstag und Bekanntmachung des Hinweises auf die Patenterteilung: **05.08.2015**
(21) Anmeldenummer: 12004339.3
(22) Anmeldetag: 05.06.2012
(51) Int. Cl.: H02G 3/18

(54) **Gerätebecher für Unterflur-Elektroinstallationen**
Device holder for underfloor electrical installations
Panier d'appareillage pour installations électriques souterraines

(30) Priorität: 22.06.2011 DE 202011102159 U
(43) Veröffentlichungstag der Anmeldung: 26.12.2012
(73) Patentinhaber: Tehalit GmbH, 67716 Heltersberg (DE)
(72) Erfinder: Szabo, Thomas, 66849 Landstuhl (DE); Vatter, Klaus, 66978 Clausen (DE)
(74) Vertreter: Nuss, Laurent

(56) Entgegenhaltungen:
- EP-A1- 0 991 158
- DE-U1- 20 204 093
- DE-U1- 20 205 354
- GB-A- 2 257 847
- US-A- 5 023 396
- US-A1- 2002 095 887

## Beschreibung

Die vorliegende Erfindung betrifft einen Gerätebecher zur Aufnahme von Elektroinstallationsgeräten bei Unterflurinstallationen.

Gerätebecher oder Geräteträger dienen zur Aufnahme von Elektroinstallationsgeräten wie Steckdosen, Datenanschlüssen, Antennenbuchsen etc. und werden an Versorgungseinheiten im Unterflurbereich befestigt. Eine solche Unterflurgerätedose ist beispielsweise in der EP-PS 2 516 524 beschrieben.

Um den Gerätebecher in die gewünschte Tiefe einzubauen, sind unterschiedliche Lösungen bekannt. So werden bei bekannten Versorgungseinheiten, wie sie beispielsweise in der DE 101 35 662 A1 beschrieben sind, im Unterflurbereich die Gerätebecher in die gewünschte Tiefe dadurch befestigt, dass ein zusätzlicher Zwischenrahmen unter den Gerätebecher eingesetzt wird, an dem das Gehäuse des Gerätebechers dann montiert wird. Durch unterschiedlich hohe Zwischenrahmen kann die gewünschte Tiefe für den jeweiligen Gerätebecher ausgewählt werden. Allerdings müssen bei dieser Lösung mehrere unterschiedlich große Zwischenrahmen bereitgestellt werden, was bei der Montage einen höheren Materialeinsatz erfordert.

Neuere Lösungen sehen deshalb Versorgungseinheiten vor, die mit Rastleitern ausgerüstet sind. Eine solche Versorgungseinheit ist beispielsweise in der DE 20 2008 004 144 U1 beschrieben. Die Rastleitern befinden sich an zwei gegenüber liegenden Seiten an einem Rastleiterrahmen, wobei mehrere Schlitzreihen vorgesehen sind, damit der Gerätebecher in unterschiedlichen Höhen eingesetzt werden kann. Zum Einbau mehrerer Gerätebecher sind an dem Rastleiterahmen mehrere Rastleitern nebeneinander angeordnet. Der Gerätebecher wird schließlich über entsprechende Klemmelemente in der gewünschten Einsetztiefe in einer Schlitzreihe der Rastleitern befestigt. In der DE 20 2008 004 144 U1 ist für die Befestigung des Gerätebechers ein Zusatzrahmen als Rastleiterverlängerung vorgesehen.

Ein herkömmlicher Gerätebecher ist in US 5023396 A offenbart.

Bei den bekannten Lösungen besteht das Problem, dass zum einen zusätzliche Klemmmittel zur Befestigung des Gerätebechers an der Versorgungseinheit notwendig sind, was einen erhöhten Materialeinsatz erfordert; zum anderen besteht bei den bekannten Lösungen das Problem, dass bei der Befestigung des Gerätebechers an der Versorgungseinheit zusätzliches Werkzeug zur Verklemmung oder Verrastung notwendig ist. Auch dies ist unbefriedigend. Auch beobachtet man häufig, dass der Halt des Gerätebechers an der Versorgungseinheit unzureichend ist, so dass der Gerätebecher bei Anwendung von Kraft (z.B. beim Herausziehen oder Hereindrücken eines Netzsteckers in eine Steckdose des eingebauten Elektroinstallationsgerätes) sich von der Versorgungseinheit löst und in diese hineinfällt. Vielfach muss der Gerätebecher von oben schräg in die entsprechende Schlitzreihe der Rastleiter der Versorgungseinheit eingeführt werden, um die Gerätebecher dann auf der anderen Seite in den entsprechenden Schlitz mit der Versorgungseinheit ebenfalls zu verrasten. Hierbei wird der Rahmen sehr oft verformt. Der Geräteträger hat dann keinen ausreichenden Halt mehr.

Unabhängig von den oben genannten Nachteilen besteht bei bekannten Gerätebechern ferner das Problem, dass diese zumeist nur für den Einbau jeweils eine Art oder Größe von Elektroinstallationsgeräten geeignet sind. Der Einbau von Steckdosenblöcken oder Datenanschlusseinrichtungen erfordert jedoch unterschiedlich große Abmessungen, so dass es in der Vergangenheit notwendig war, unterschiedliche Geräteträger für die jeweiligen Elektroinstallationsgeräte bereitzustellen. Der Monteur muss daher je nach Einbausituation immer mehrere Geräteträger für den einzubauenden Gerätetyp bereithalten, was ebenfalls unbefriedigend ist.

Der vorliegenden Erfindung liegt daher die Aufgabe zugrunde, einen verbesserten Gerätebecher für Unterflur-Elektroinstallationen bereitzustellen, der die erwähnten Nachteile des Standes der Technik verhindert und die Montage von Elektroinstallationsgeräten erleichtern soll.

Diese Aufgabe wird gelöst durch einen Gerätebecher mit den Merkmalen des Anspruchs 1.

Der erfindungsgemäße Gerätebecher vereinigt mehrere Funktionen in einem Bauteil. Die Grundversion sieht einen stirnseitig am Gerätebecher angeordneten Verriegelungsschieber vor, der über einzelne Raststufen am Gehäuse des Gerätebechers verschiebbar montiert ist und dadurch eine vereinfachte Montage ermöglicht.

Der erfindungsgemäße Gerätebecher umfasst hierfür einen Einbaurahmen zum Geräteeinbau mit entsprechenden Seitenteilen und Stirnelementen. An wenigstens einem Stirnelement des Einbaurahmens (vorzugsweise an beiden Stirnelementen) ist ein Verriegelungsschieber angeordnet, der eine Rastausnehmung besitzt. In diese Rastausnehmung greift für die jeweilige Einbausituation eine am Einbaurahmen ausgebildete Rastnase. An dem Stirnelement sind ferner Führungselemente ausgebildet, über die der Verriegelungsschieber für die Montage an einer Versorgungseinheit von einer Einbauposition in eine Verriegelungsposition verschiebbar ist.

In der Einbauposition ist der Verriegelungsschieber eingeschoben, d.h. die Vorderkante des Verriegelungsschiebers schließt mit der Außenkante des Seitenelementes des Einbaurahmens bündig ab. Auf diese Weise ist ein problemloser Einbau des Gerätebechers in die Versorgungseinheit möglich. Eine Verformung des Rahmens oder der Einsatz eines Zwischenrahmens ist im Gegensatz zu bekannten Lösungen nicht erforderlich. Sind die gewünschte Einbautiefe und Position des Gerätebechers gefunden, so wird der Verriegelungsschieber von der Einbauposition in die Verriegelungsposition gedrückt. Die Vorderkante des Verriegelungsschiebers rastet dann in den jeweiligen Schlitz der Rastleiter der Versorgungseinheit. Die Verrastung des Gerätebechers wird vorzugsweise auf beiden Seiten durchgeführt. Im Vergleich zu Lösungen mit einem festen, stationären Rastelement wird der Gerätebecher sicher an der Versorgungseinheit gehalten und in der Verriegelungsposition fixiert. Ein umständliches Einführen des Gerätebechers in die Rastleiter der Versorgungseinheit (beispielsweise schräg von oben) ist nicht mehr notwendig. Auch kann der Verriegelungsschieber beidseitig recht tief in den Schlitz der Rastleiter eingeführt werden, was den sicheren Halt weiter begünstigt.

Um den Verriegelungsschieber sowohl in der Einbauposition als auch Verriegelungsposition sicher zu halten, ist die Rastnase als Doppelnase ausgebildet. In der Einbauposition kommt die gegenüber dem Rahmen weiter innen gelegene Rasterhebung zum Einsatz, um darüber den Verriegelungsschieber fest in der Einbauposition zu halten. Ist der Gerätebecher vom Monteur in der Versorgungseinheit eingesetzt und soll an dieser befestigt werden, wird der Verriegelungsschieber mit etwas Kraftaufwand aus der Raststufe der Einbauposition in die Raststufe der Verriegelungsposition geschoben. Dabei gleitet die Rastnase der Einbauposition aus der Rastausnehmung heraus und klickt sich bei der zweiten Rastnasenerhebung in die Verriegelungsposition ein. Um ein Überschieben des Verriegelungsschiebers über die Verriegelungsposition hinaus zu verhindern, sind an den Führungselementen des Einbaurahmens spezielle Stoßkanten ausgebildet. An dem Verriegelungsschieber sind wiederum Haltestege ausgebildet, die in der Verriegelungsposition gegen die Stoßkanten drücken und das Überschieben verhindern. Als Führungselemente können beispielsweise mit einer Nut versehene Führungen oder Schienen dienen. In der Führung oder auf der Schiene ist der Verriegelungsschieber in die einzelnen Positionen verschiebbar.

In einer bevorzugten Ausführungsform können unterschiedliche Elektroinstallationsgeräte mit verschiedenen Einbaugrößen in einem einzigen Gerätebecher eingebaut werden. Bislang musste man bei unterschiedlichen Elektroinstallationsgeräten oder Gerätetypen unterschiedlicher Abmessungen eigene dafür vorgesehene Geräteträger verwenden. In einer bevorzugten Ausführungsform ist daher vorgesehen, dass an der Oberseite der Seitenteile des Einbaurahmens Kaschierungselemente angeordnet sind, die über quer verlaufende Sollbruchstellen voneinander getrennt sind. Ferner sind vorzugsweise an der Innenseite der Seitenteile des Einbaurahmens längsseitig verlaufende Stege angeordnet, die ebenfalls über quer verlaufende Sollbruchstellen verfügen. Je nach Art und Abmessung des Einbaugerätes können die Kaschierungselemente und/oder die Stege an den entsprechenden Positionen über die Sollbruchstellen entfernt werden. Dadurch ist es möglich, in einem einzigen Gerätebecher mehrere unterschiedliche Elektroinstallationsgeräte (beispielsweise einen Mehrfachsteckdosenblock zusammen mit einer Antennenanschlussdose) zu befestigen. Die Kaschierungselemente können vorzugsweise an deren Außenseite eine zentrale Vertiefung zur Anbringung eines Etiketts oder einer Beschriftung besitzen.

Für den Geräteeinbau sind vorzugsweise die Sollbruchstellen des Steges und die Sollbruchstellen der Kaschierungselemente entlang der Querachsenlinie zueinander angeordnet, so dass sowohl das Kaschierungselement als auch der Steg bündig abschließen.

Je nach Art des Einbaugerätes kann es notwendig sein, den Einbaurahmen von unten über eine Abdeckung zu verschließen. Dies ist insbesondere bei stromführenden Elektroeinbauten oftmals erforderlich. Bei Einbauten, die Kabel mit großen Durchmessern und damit großen Biegeradien erfordern (z.B. Elektroinstallationsgeräte zur Datenübertragung oder Antennenanschlussdosen), ist eine Abdeckung dagegen nicht unbedingt vorgeschrieben. Um solchen unterschiedlichen Montagesituationen gerecht zu werden, ist an dem Einbaurahmen von unten eine Abdeckung befestigbar, wobei die Abdeckung über eine quer verlaufende Sollbruchstelle in zwei Teile abtrennbar ist. Auf diese Weise kann der abzudeckende, stromführende Teil eines Elektroinstallationsgerätes von dem anderen "offenen" Teil getrennt werden. Zur seitlichen Abtrennung der unterschiedlichen Elektroinstallationsgeräte wird von unten an der Abdeckung vorzugsweise ein Zwischenwandstück eingesetzt, was die Abdeckung gleichzeitig seitlich an der Stirnseite abschließt.

Die Erfindung wird in den nachfolgenden Zeichnungen näher erläutert. Es zeigen
- Fig. 1: eine aus dem Stand der Technik bekannte Versorgungseinheit mit mehreren Reihen von Rastleitern zur Befestigung von Geräteeinbaudosen,
- Fig. 2 bis 3: Ausführungsvarianten des erfindungsgemäßen Gerätebechers mit mehreren Reihen von unterschiedlichen Elektroinstallationsgeräten,
- Fig. 4: die Verriegelungseinheit eines Gerätebechers,
- Fig. 5: die Abdeckung des Gerätebechers mit Sollbruchstelle.

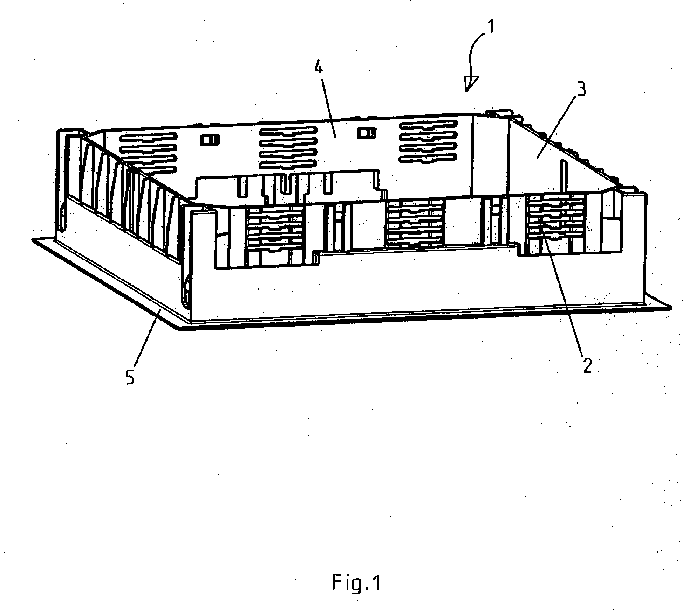

In Fig. 1 ist eine bekannte Versorgungseinheit 1 gezeigt, wie sie im Stand der Technik eingesetzt wird. Die Versorgungseinheit 1 besteht aus einem Boden 5, zwei gegenüberliegend angeordnet Seitenwänden 4 sowie Stirnseiten 3. An den Seitenelementen 4 sind drei Reihen von Rastleitern 2 ausgebildet. Die Rastleitern 2 besitzen übereinander angeordnete Schlitze, die es ermöglichen, Gerätebecher mit unterschiedlicher Einbautiefe an der Versorgungseinheit 1 zu befestigen. In der gezeigten Ausführungsform können drei verschiedene Gerätebecher nebeneinander mit der Versorgungseinheit 1 über die Rastleitern 2 verbunden werden.

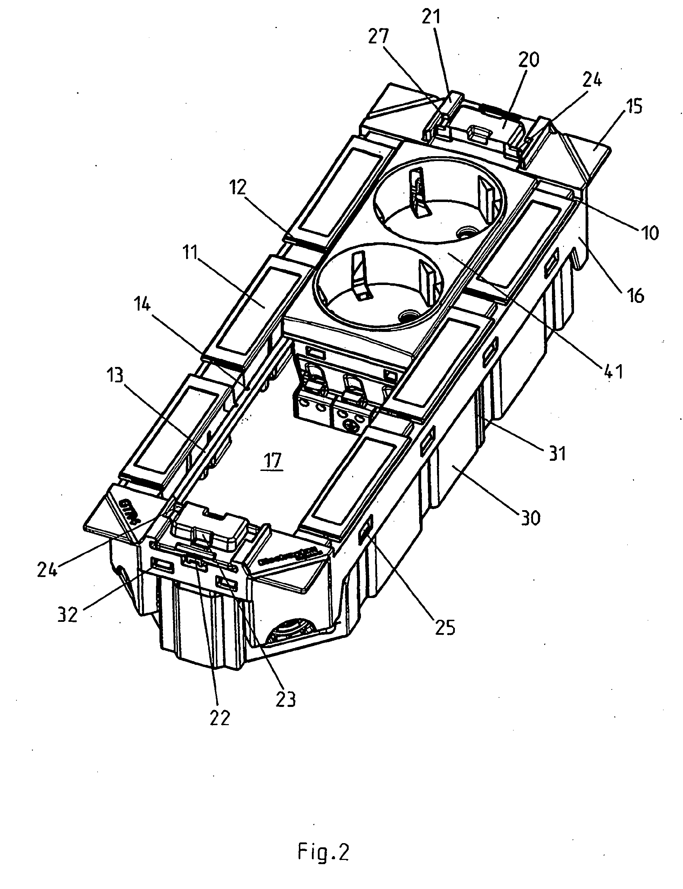

In Fig. 2 ist der Aufbau einer Ausführungsform des erfindungsgemäßen Gerätebechers gezeigt. Grundbestandteil ist der Einbaurahmen 10, der aus gegenüberliegend angeordneten Seitenelementen 16 sowie mit diesen verbundenen, ebenfalls gegenüberliegend angeordneten Stirnelementen 15 besteht. An den Stirnelementen 15 sind Führungselemente 21 mit einer darin eingefassten Nut ausgebildet. In diesen Führungselementen 21 ist ein Verriegelungsschieber 20 von einer Einbauposition in eine Verriegelungsposition verschiebbar. In der gezeigten Ausführungsform ist die Einbauposition des Verriegelungsschiebers 20 gezeigt. Für die Verriegelungsposition wird der Verriegelungsschieber 20 nach vorne gedrückt. Um ein Überschieben des Verriegelungsschiebers 20 zu vermeiden, sind an den Führungselementen 21 Stoßkanten 27 für am Verriegelungsschieber 20 ausgeformte Haltestege 24 ausgebildet.

In dem Innenraum 17 des Einbaurahmens 10 ist ein Elektroinstallationsgerät 41 (hier ein Doppelsteckdosenblock) gezeigt. Die Oberseite des Einbaurahmens 10 ist mit seriell angeordneten Kaschierungselementen 11 abgedeckt. Die Kaschierungselemente 11 können eine zentrale Vertiefung aufweisen, in der beispielsweise ein Etikett, eine Markierung oder eine Beschriftung angebracht werden kann.

Der Einbaurahmen 10 wird von der Unterseite über eine Abdeckung 30 mittels Rastnasen 25 an dem Einbaurahmen 10 befestigt. Die Rastnasen 25 greifen hierbei zur Befestigung in entsprechende Rastausnehmungen 32 des Einbaurahmens 10.

An den Innenseiten der Seitenelemente 16 des Einbaurahmens 10 sind zwei parallel in Längsrichtung verlaufende, gegenüberliegend angeordnete Stege 13 ausgebildet. Diese dienen als Halt für das Elektroinstallationsgerät 41.

Die Kaschierungselemente 11 sind über Sollbruchstellen 12 abtrennbar. Das Gleiche gilt auch für die Stege 13, die ebenfalls über Sollbruchstellen 14 verfügen. Die Sollbruchstellen 12 der Kaschierungselemente 11 sowie die Sollbruchstellen 14 der Stege 13 sind entlang einer Querlinie angeordnet, so dass Platz für den Einbau anderer Elektroinstallationsgeräte geschaffen werden kann. Auch die Abdeckung 30 besitzt eine Sollbruchstelle 31, um stromführende Elektroinstallationsgeräte 41 in dem erfindungsgemäßen Gerätebecher abzudecken, während bei anderen Elektroinstallationsgeräten eine Abdeckung nicht notwendig ist.

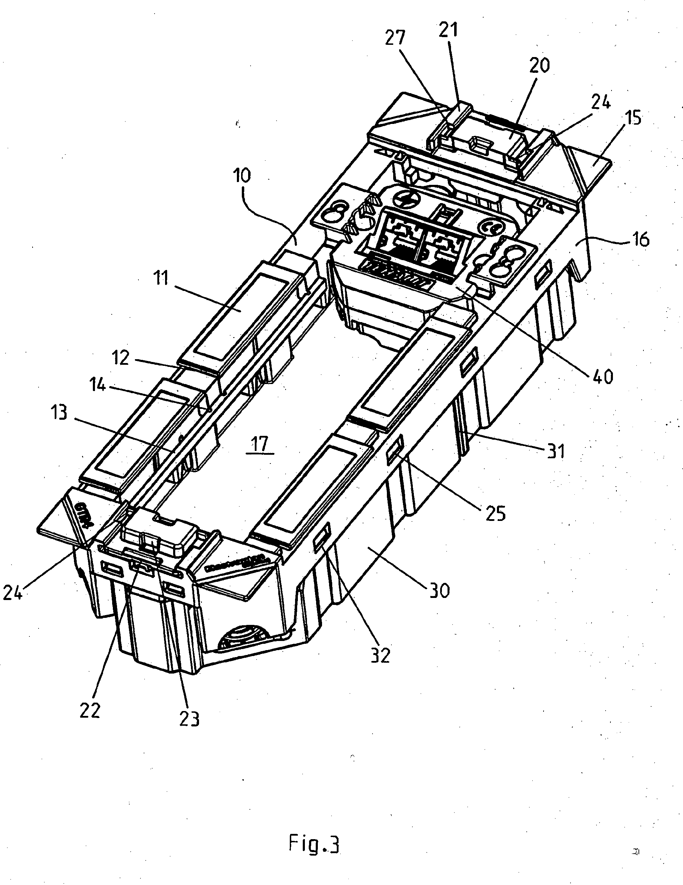

In Fig. 3 erkennt man die Möglichkeit, Elektroinstallationsgeräte unterschiedlicher Art oder Abmessungen in den selben Geräteträger einzubauen. In der gezeigten Ausführungsform handelt es sich um einen Monoblock 40 für Datengeräte, der in den Innenraum 17 des Einbaurahmens 10 nur dann passt, wenn die Kaschierungselemente 11 sowie die längs verlaufenden Innenstege 13 an der Einbauposition an den Sollbruchstellen 12, 14 herausgebrochen wurden. Auf diese Weise ist es möglich, ein größeres Elektroinstallationsgerät 40 in dem Einbaurahmen 10 einzubauen und zu befestigen.

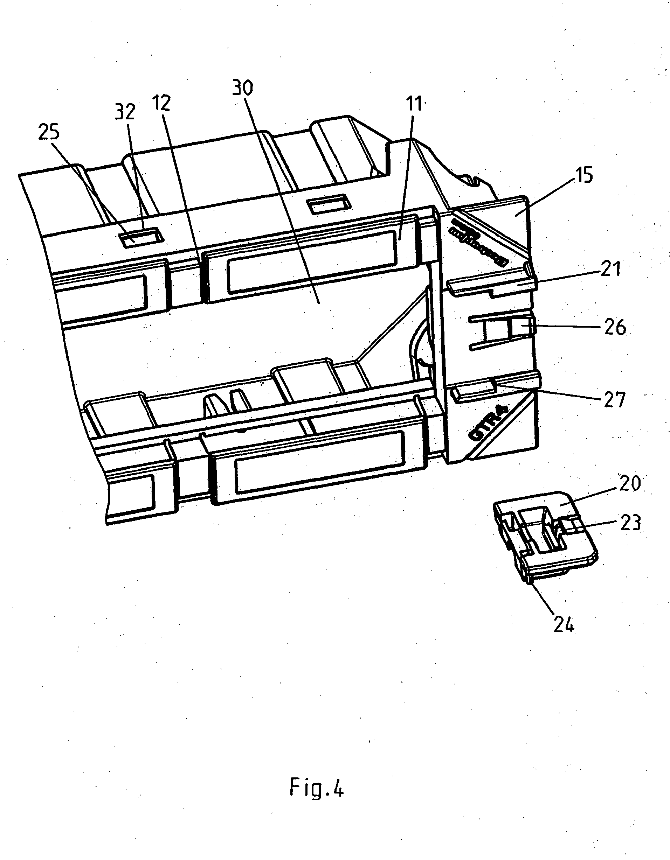

In Fig. 4 ist die Verschiebeeinrichtung gezeigt. Man erkennt das Stirnelement 15, an dem zwei parallel zueinander angeordnete Führungselemente 21 angeordnet sind. Zwischen den Führungselementen 21 befindet sich eine Rastnase 26, die in der gezeigten Ausführungsform als Doppelnase ausgebildet ist. Dadurch sind zwei Rastpositionen möglich, nämlich die Einbauposition sowie die Verriegelungsposition. Der Verriegelungsschieber 20 besitzt eine zentrale Rastausnehmung 23, in welche die Erhebungen der Rastnase 26 in der jeweiligen Montageposition greifen. Der an dem Verriegelungsschieber 20 ausgebildete Haltesteg 24 stößt beim Verschieben des Verriegelungsschiebers 20 in die Verriegelungsposition gegen Stoßkanten 27 der Führungselemente 21. Dadurch wird ein Überschieben des Verriegelungsschiebers 20 (z.B. bei zu hoher Kraftanwendung) verhindert.

Um den Verriegelungsschieber 20 wieder aus der Verriegelungsposition zu lösen, kann mittels eines Werkzeuges die Rastnase 26 nach unten gedrückt und der Verriegelungsschieber 20 dadurch freigegeben werden. Anschließend ist es möglich, den Verriegelungsschieber 20 von der Verriegelungsposition zurück in die Einbauposition zu bringen, beispielsweise um den Geräteträger aus der Versorgungseinheit zum Einbau weiterer Elektroinstallationsgeräte oder zur Wartung zu entfernen.

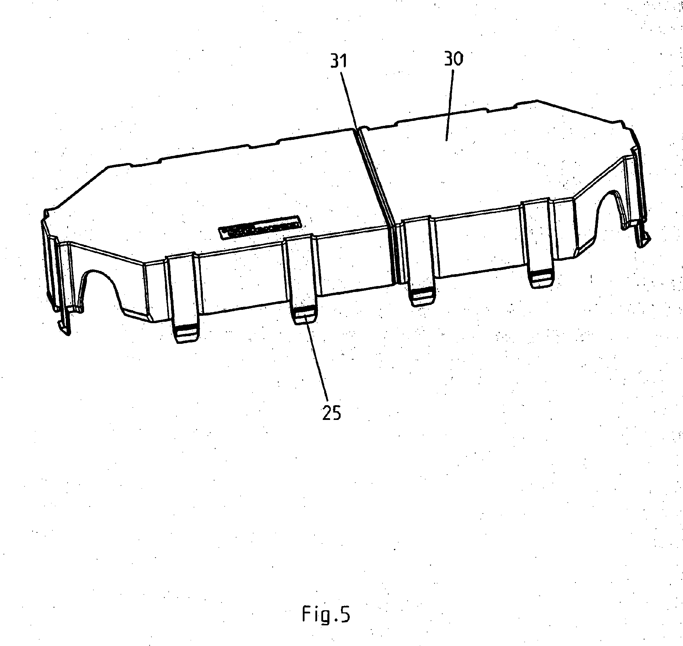

In Fig. 5 ist die Abdeckung 30 für den Einbaurahmen 10 gezeigt. Da hauptsächlich stromführende Elektroinstallationsgeräte über eine Abdeckung verfügen müssen, während Niederstrom-Installationsgeräte, an die zum Teil Kabel und Leitungen mit großen Biegeradien angeschlossen werden müssen, keine Abdeckung erfordern, ist erfindungsgemäß vorgesehen, dass die Abdeckung 30 über eine Sollbruchstelle 31 verfügt, so dass der Teil des Elektroinstallationsgerätes frei bleibt, bei dem eine Abdeckung nicht erforderlich ist. Die Sollbruchstelle 31 ermöglicht die entsprechende Anpassung der Abdeckung 30 unmittelbar am Montageort. Die Abdeckung 30 wird über Rasthaken 25 mit dem Einbaurahmen 10 des Gerätebechers befestigt.

Der erfindungsgemäße Gerätebecher hat den Vorteil, dass mit einem einzigen Geräteträger unterschiedliche Einbausituationen verwirklicht werden können. Ferner können Elektroinstallationsgeräte mit unterschiedlichen Abmessungen und Anschlüssen in denselben Gerätebecher eingebaut werden. Bislang mussten hierfür Geräteträger verwendet werden, die an das jeweilige Elektroinstallationsgerät angepasst waren. Dies ist bei dem erfindungsgemäßen Geräteträger nicht mehr erforderlich. Der Einbau unterschiedlicher Arten von Elektroinstallationsgeräten wird ferner auch dadurch ermöglicht, dass die Abdeckung bedarfsweise über eine Sollbruchstelle an das jeweilige Elektroinstallationsgerät angepasst werden kann. Schließlich wird ein Hereinfallen des Gerätebechers über den verschiebbaren Verriegelungsschieber verhindert, der zum einen einen leichten Einbau, gleichzeitig jedoch auch einen festen Halt nach der erfolgten Montage ermöglicht.

## Patentansprüche

1. Gerätebecher zur Aufnahme von Elektroinstallationsgeräten bei Unterflurinstallationen, umfassend einen Einbaurahmen (10) zum Geräteeinbau mit Seitenteilen (16) und Stirnelementen (15), wobei an wenigstens einem Stirnelement (15) des Einbaurahmens (10) ein Verriegelungsschieber (20) angeordnet ist, der eine Rastausnehmung (23) besitzt, in die eine am Einbaurahmen (10) ausgebildete Rastnase (26) eingreift, wobei an dem Stirnelement (15) Führungselemente (21) ausgebildet sind, über die der Verriegelungsschieber (20) von einer Einbauposition bei einer Versorgungseinheit (1) in eine Verriegelungsposition verschiebbar ist, **dadurch gekennzeichnet, dass** die Rastnase (26) mit zwei Rastnasenerhebungen als Doppelnase ausgebildet ist, die jeweils für eine Verrastung in der Einbauposition und in der Verriegelungsposition ausgebildet sind.

2. Gerätebecher nach Anspruch 1, **dadurch gekennzeichnet, dass** an den Führungselementen (21) des Einbaurahmens (10) Stoßkanten (27) ausgebildet sind, die ein Überschieben des Verriegelungsschiebers (20) über die Verriegelungsposition durch daran ausgeformten Haltestege (24) verhindern.

3. Gerätebecher nach einem der vorhergehenden Ansprüche, **dadurch gekennzeichnet, dass** an der Oberseite der Seitenteile (16) des Einbaurahmens (10) Kaschierungselemente (11) angeordnet sind, die über quer verlaufende Sollbruchstellen (12) voneinander getrennt sind.

4. Gerätebecher nach Anspruch 3, **dadurch gekennzeichnet, dass** die Kaschierungselemente (11) an deren Außenseite eine zentrale Vertiefung zur Anbringung eines Etiketts oder einer Beschriftung besitzen.

5. Gerätebecher nach einem der vorhergehenden Ansprüche, **dadurch gekennzeichnet, dass** an der Innenseite der Seitenteile (16) des Einbaurahmens (10) längsseitig verlaufende Stege (13) angeordnet sind, die über quer verlaufende Sollbruchstellen (14) verfügen.

6. Gerätebecher nach Anspruch 5, **dadurch gekennzeichnet, dass** die Sollbruchstellen (14) des Steges (13) und die Sollbruchstellen (12) der Kaschierungselemente (11) entlang der Querachsenlinie zueinander angeordnet sind.

7. Gerätebecher nach einem der vorhergehenden Ansprüche, **dadurch gekennzeichnet, dass** an dem Einbaurahmen (10) eine Abdeckung (30) von unten befestigbar ist, wobei die Abdeckung (30) über eine quer verlaufende Sollbruchstelle (31) in zwei Teile abtrennbar ist.

## Claims

1. Device holder for receiving electric installation devices in underfloor installations, comprising an installation frame (10) for device installation with side parts (16) and end elements (15), wherein a locking slide (20), which has a latching recess (23), in which a latching lug (26) formed on the installation frame (10) engages, is arranged on at least one end element (15) of the installation frame (10), wherein guide elements (21), by means of which the locking slide (20) can be displaced from an installation position in a supply unit (1) into a locking position, are formed on the end element (15), **characterised in that** the latching lug (26) is formed with two latching lug elevations as a double lug, which are in each case formed for latching in the installation position and in the locking position.

2. Device holder according to claim 1, **characterised in that** abutting edges (27), which prevent sliding of the locking slide (20) over the locking position by holding webs (24) formed thereon, are formed on the guide elements (21) of the installation frame (10).

3. Device holder according to any one of the preceding claims, **characterised in that** lamination elements (11), which are separated from one another by transversely running predetermined breaking points (12), are arranged on the upper side of the side parts (16) of the installation frame (10).

4. Device holder according to claim 3, **characterised in that** the lamination elements (11), on the outside thereof, have a central indentation for attaching a label or an inscription.

5. Device holder according to any one of the preceding claims, **characterised in that** webs (13) running longitudinally, which have transversely running predetermined breaking points (14), are arranged on the inside of the side parts (16) of the installation frame (10).

6. Device holder according to claim 5, **characterised in that** the predetermined breaking points (14) of the web (13) and the predetermined breaking points (12) of the lamination elements (11) are arranged along the transverse axis line with respect to one another.

7. Device holder according to any one of the preceding claims, **characterised in that** a cover (30) can be fastened from below on the installation frame (10), the cover (30) being separable into two parts by means of a transversely running predetermined breaking point (31).

## Revendications

1. Panier d'appareillage destiné à recevoir des appareils d'installations électriques dans le cas d'installations en sous-sol, comprenant un cadre de montage (10) pour le montage d'appareils, avec des parties latérales (16) et des éléments frontaux (15), sachant qu'un coulisseau de verrouillage (20) est disposé sur au moins un élément frontal (15) du cadre de montage (10), coulisseau qui possède un évidement d'enclenchement (23) dans lequel s'engage un ergot d'enclenchement (26) formé sur le cadre de montage (10), sachant que des éléments de guidage (21) sont formés sur l'élément frontal (15), à l'aide desquels le coulisseau de verrouillage (20) peut être coulissé d'une position de montage pour une unité d'alimentation (1) dans une position de verrouillage, **caractérisé en ce que** l'ergot d'enclenchement (26) est réalisé sous la forme d'un ergot double avec deux bossages d'ergot d'enclenchement qui sont respectivement conçus pour un enclenchement dans la position de montage et pour un enclenchement dans la position de verrouillage.

2. Panier d'appareillage selon la revendication 1, **caractérisé en ce que** des arêtes de joint (27) sont formées sur les éléments de guidage (21) du cadre de montage (10) et elles empêchent le coulisseau de verrouillage (20), par des nervures de retenue (24) formées sur lui, de coulisser au-delà de la position de verrouillage.

3. Panier d'appareillage selon l'une des revendications précédentes, **caractérisé en ce que** des éléments de doublage (11) sont disposés sur le côté supérieur des parties latérales (16) du cadre de montage (10), éléments qui sont séparés les uns des autres par des zones destinées à la rupture (12) s'étendant transversalement.

4. Panier d'appareillage selon la revendication 3, **caractérisé en ce que** les éléments de doublage (11) possèdent sur leur côté extérieur un renfoncement central pour la mise en place d'une étiquette ou d'un marquage.

5. Panier d'appareillage selon l'une des revendications précédentes, **caractérisé en ce que** des nervures (13) s'étendant longitudinalement sont disposées sur le côté intérieur des parties latérales (16) du cadre de montage (10), nervures qui disposent de zones destinées à la rupture (14) s'étendant transversalement.

6. Panier d'appareillage selon la revendication 5, **caractérisé en ce que** les zones destinées à la rupture (14) de la nervure (13) et les zones destinées à la rupture (12) des éléments de doublage (11) sont disposées les unes par rapport aux autres le long de la ligne d'axe transversal.

7. Panier d'appareillage selon l'une des revendications précédentes, **caractérisé en ce qu'**un recouvrement (30) peut être fixé par le dessous sur le cadre de montage (10), sachant que le recouvrement (30) peut être séparé en deux parties au moyen d'une zone destinée à la rupture (31) s'étendant transversalement.
